# EUROPEAN PATENT APPLICATION

(11) **EP 3 382 604 A2**
(43) Date of publication of application: **03.10.2018**
(21) Application number: 18164650.6
(22) Date of filing: 28.03.2018
(51) Int. Cl.: G06K 9/00

(54) **ASSISTANCE APPARATUS**

(30) Priority: 28.03.2017 JP 2017063012
(71) Applicant: AISIN SEIKI KABUSHIKI KAISHA, Kariya-shi, Aichi-ken, 448-8650 (JP)
(72) Inventor: NOSE, Keisuke, KARIYA-SHI, AICHI-KEN, 448-8650 (JP); ADACHI, Jun, KARIYA-SHI, AICHI-KEN, 448-8650 (JP)
(74) Representative: Cabinet Beau de Loménie

(57) **Abstract**

An assistance apparatus includes: an imaging unit that captures an image of a surrounding of a vehicle to generate a captured image (92); and a processing unit (50) that corrects deviation of a correction target based on a preset reference value and a position of a vanishing point (VP), a vanishing line (VL), or a horizontal line (HL) specified in the captured image (92) to assist driving of the vehicle.

## Description

### TECHNICAL FIELD

This disclosure relates to an assistance apparatus.

### BACKGROUND DISCUSSION

There is known an apparatus for correcting, for example, deviation of a correction target caused by a change in vehicle height, which is the height of a vehicle, a change in vehicle inclination, or the like. The correction target is, for example, a position in a captured image captured by an imaging device with its optical axis inclined due to the inclination of the vehicle. Such an apparatus is provided with, for example, a sensor for detecting the vehicle height, and assists driving by specifying a change in vehicle height or in vehicle inclination with the sensor and correcting the correction target such as an image. See, for example, JP 2005-075015 A.

However, the above-mentioned technique has a problem in that a configuration is complicated since the sensor for detecting the vehicle height is separately required.

Thus, a need exists for an assistance apparatus that assists driving of a vehicle by correcting a correction target resulting from a change in vehicle height or the like and is capable of suppressing complication of a configuration.

### SUMMARY

An assistance apparatus according to an aspect of this disclosure includes an imaging unit that captures an image of a surrounding of a vehicle to generate a captured image, and a processing unit that corrects deviation of a correction target based on a preset reference value and a position of a vanishing point, a vanishing line, or a horizontal line specified in the captured image to assist driving of the vehicle.

With this configuration, the assistance apparatus according to the aspect of this disclosure corrects the deviation of the correction target, which is caused by a change in the vehicle height or the like, based on the position of the vanishing point or the like specified from the captured image, so that it is not necessary to separately provide a sensor such as a vehicle height sensor, and thus the assistance apparatus is capable of suppressing complication of a configuration to correct deviation of the correction target.

In the assistance apparatus according to the aspect of this disclosure, the processing unit may acquire the captured image including an image of a pair of parallel lines, which are parallel to each other, and may specify the position of the vanishing point or the vanishing line based on the pair of parallel lines.

With this configuration, even in an environment where it is difficult to cause a horizontal line to be placed in the captured image, such as a parking space, the assistance apparatus can correct the correction target by specifying the vanishing point or the vanishing line based on the pair of parallel lines.

The assistance apparatus according the aspect of this disclosure may assist a driver to park the vehicle, in which the pair of parallel lines may be lane markings of a parking space.

In the assistance apparatus according to the aspect of this disclosure, the processing unit may specify positions of a plurality of vanishing points, vanishing lines, or horizontal lines from a plurality of the captured images, and may correct the correction target based on the reference value and an average of the positions of the plurality of horizontal lines, vanishing lines, or vanishing points.

As described above, the assistance apparatus according to the aspect of this disclosure is capable of increasing the accuracy of correction since it can specify the positions of a plurality of vanishing points and correct the correction target based on a reference value and the average of the plurality of vanishing points.

In the assistance apparatus according to the aspect of this disclosure, the correction target may include at least one of a vehicle height, an inclination of the vehicle, an optical axis of a lens in the imaging unit, and a position of a target parking frame to be superimposed on the captured image.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view illustrating a vehicle according to a first embodiment;
Fig. 2 is a block diagram for explaining a configuration of an assistance apparatus mounted on a vehicle;
Fig. 3 is a functional block diagram for explaining a function of an information processing device;
Fig. 4 is a side view of the vehicle in a reference state;
Fig. 5 is a view for explaining a method of specifying a vanishing point in a captured image in the reference state;
Fig. 6 is a plan view for explaining setting of a target parking frame in the reference state;
Fig. 7 is a side view of the vehicle in a state deviated from the reference state;
Fig. 8 is a view for explaining deviation of the vanishing point in the captured image in the state deviated from the reference state;
Fig. 9 is a plan view for explaining correction of the target parking frame in the state deviated from the reference state;
Fig. 10 is a table illustrating an example of a correction table;
Fig. 11 is a flowchart of an assistance processing executed by a processing unit according to the first embodiment; and
Fig. 12 is a flowchart of an assistance processing executed by a processing unit according to a second embodiment.

### DETAILED DESCRIPTION

Hereinafter, the same reference numerals will be given to the same constituent elements of following exemplary embodiments and the like, and a redundant description thereof will be appropriately omitted.

### <First Embodiment>

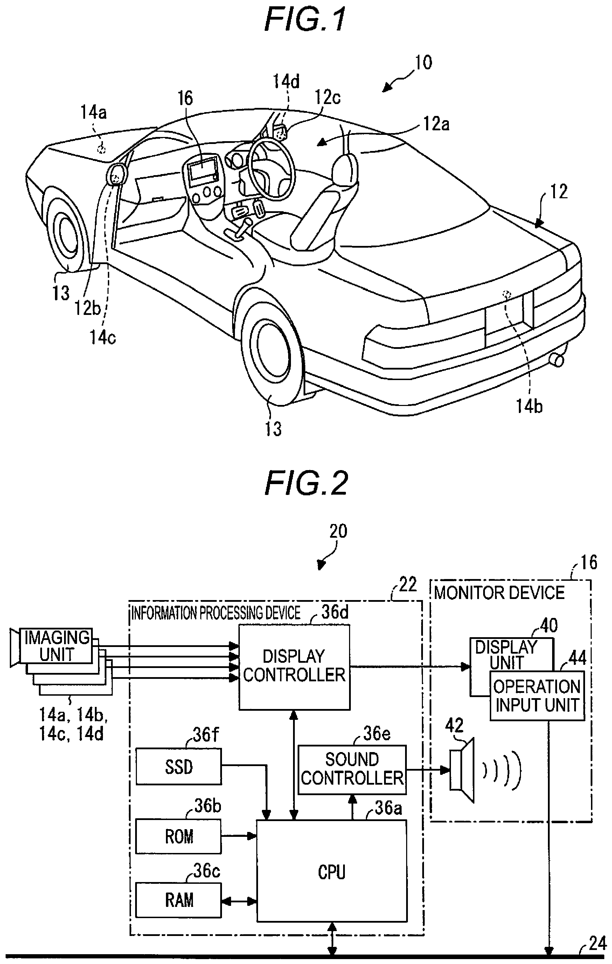

Fig. 1 is a view illustrating a vehicle 10 in a first embodiment. The vehicle 10 may be, for example, an automobile using an internal combustion engine (an engine) (not illustrated) as a drive source (an internal combustion engine automobile), an automobile using an electric motor (a motor) (not illustrated) as a drive source (an electric automobile, a fuel cell automobile, etc.), or an automobile using both of them as drive sources (a hybrid automobile). In addition, the vehicle 10 may be equipped with various transmission devices, and may be equipped with various devices (systems, elements, etc.) required to drive the internal combustion engine or the electric motor. In addition, the type, the number, the layout, and the like of devices involved in the driving of wheels 13 in the vehicle 10 may be set in various ways.

As illustrated in Fig. 1, the vehicle 10 includes a vehicle body 12, a plurality of (e.g., four) wheels 13, one or a plurality of (e.g., four) imaging units 14a, 14b, 14c, and 14d, and a monitor device 16. When it is not necessary to distinguish the imaging units 14a, 14b, 14c, and 14d, they will be described as imaging units 14.

The vehicle body 12 forms a vehicle room 12a in which an occupant rides. The vehicle body 12 holds the wheels 13 and accommodates the imaging unit 14 and the monitor device 16 in the vehicle room 12a.

The imaging unit 14 is, for example, a digital camera incorporating an imaging element such as a charge coupled device (CCD) or a CMOS image sensor (CIS). The imaging unit 14 outputs, as captured image data, still image data or video image data including a plurality of frame images generated at a predetermined frame rate. Each imaging unit 14 has a wide-angle lens or a fish-eye lens, and is capable of imaging a range from 140° to 190° in the horizontal direction. The optical axis of the imaging unit 14 is set obliquely downward. Thus, the imaging unit 14 generates and outputs captured image data obtained by imaging the surroundings of the vehicle 10 including a surrounding road surface. For example, in a parking space, the imaging unit 14 generates a captured image including an image of lane markings, which are a pair of lines parallel to each other.

The imaging units 14 are provided around the vehicle body 12. For example, an imaging unit 14a is provided at a transversely central portion of the front end portion of the vehicle body 12 (e.g., a front bumper). The imaging unit 14a generates a captured image obtained by imaging the surroundings in front of the vehicle 10. An imaging unit 14b is provided at a transversely central portion of the rear end portion of the vehicle body 12 (e.g., a rear bumper). The imaging unit 14b generates a captured image obtained by imaging the surroundings in rear of the vehicle 10. An imaging unit 14c is provided at a longitudinally central portion of the left end portion of the vehicle body 12 (e.g., a left side view mirror 12b). The imaging unit 14c generates a captured image obtained by imaging the surroundings on the left of the vehicle 10. An imaging unit 14d is provided at a longitudinally central portion of the right end portion of the vehicle body 12 (e.g., a right side view mirror 12c). The imaging unit 14d generates a captured image obtained by imaging the surroundings on the right of the vehicle 10.

The monitor device 16 is provided within the vehicle room 12a at a position, which is visible to an occupant, for example, on a dashboard in front of a seat. The monitor device 16 displays an image, outputs sound, and receives an operation of the occupant.

Fig. 2 is a block diagram for explaining a configuration of an assistance apparatus 20 mounted on the vehicle 10. The assistance apparatus 20 corrects, based on a captured image obtained by the imaging unit 14, a correction target such as deviation of an image caused by the inclination of the optical axis of the imaging unit 14, or the like, due to the inclination of the vehicle 10 or a vehicle height, which is the height of the vehicle 10. As illustrated in Fig. 2, the assistance apparatus 20 includes the imaging units 14, the monitor device 16, an information processing device 22, and an in-vehicle network 24.

The monitor device 16 includes a display unit 40, a sound output unit 42, and an operation input unit 44.

The display unit 40 displays an image based on image data transmitted from the information processing device 22. The display unit 40 is, for example, a display device such as a liquid crystal display (LCD) or an organic electroluminescent (EL) display (OELD). The display unit 40 displays a captured image on which, for example, a parking target area, which is a target position of the vehicle 10 to be parked, is superimposed.

The sound output unit 42 outputs sound based on sound data transmitted from the information processing device 22. The sound output unit 42 is, for example, a speaker. The sound output unit 42 may be provided in the vehicle room at a position different from that of the display unit 40.

The operation input unit 44 receives an input from an occupant. The operation input unit 44 is, for example, a touch panel. The operation input unit 44 is provided on a display screen of the display unit 40. The operation input unit 44 is configured to be able to transmit an image displayed by the display unit 40. Thus, the operation input unit 44 allows the occupant to visually recognize an image displayed on the display screen of the display unit 40. The operation input unit 44 receives an instruction input when the occupant touches a position corresponding to the image displayed on the display screen of the display unit 40, and transmits the instruction to the information processing device 22.

The information processing device 22 is a computer including a microcomputer such as an electronic control unit (ECU). The information processing device 22 acquires captured image data from the imaging unit 14. The information processing device 22 transmits data about an image or sound generated based on the captured image or the like to the monitor device 16. The information processing device 22 includes a central processing unit (CPU) 36a, a read only memory (ROM) 36b, a random access memory (RAM) 36c, a display controller 36d, a sound controller 36e, and a solid state drive (SSD) 36f. In the present embodiment, the information processing device 22 manages assistance processing for the vehicle 10 by cooperation of hardware and software (control program). The CPU 36a, the ROM 36b, and the RAM 36c may be integrated in the same package.

The CPU 36a is an example of a hardware processor and reads a program stored in a nonvolatile storage device such as the ROM 36b to execute various calculation processings and controls based on the program.

The ROM 36b stores individual programs, parameters, and the like required to execute the programs. The RAM 36c temporarily stores various data for use in calculation by the CPU 36a. The display controller 36d mainly executes processing of an image obtained by the imaging unit 14, data conversion of a display image to be displayed on the display unit 40, or the like, among the calculation processings by the information processing device 22. The sound controller 36e mainly executes processing of sound to be output by the sound output unit 42, among the calculation processings by the information processing device 22. The SSD 36f is a rewritable nonvolatile storage unit and preserves data even when a power supply of the information processing device 22 is turned off.

The in-vehicle network 24 is, for example, a controller area network (CAN). The in-vehicle network 24 electrically interconnects the information processing device 22 and the operation input unit 44 so as to enable them to mutually transmit and receive signals and information.

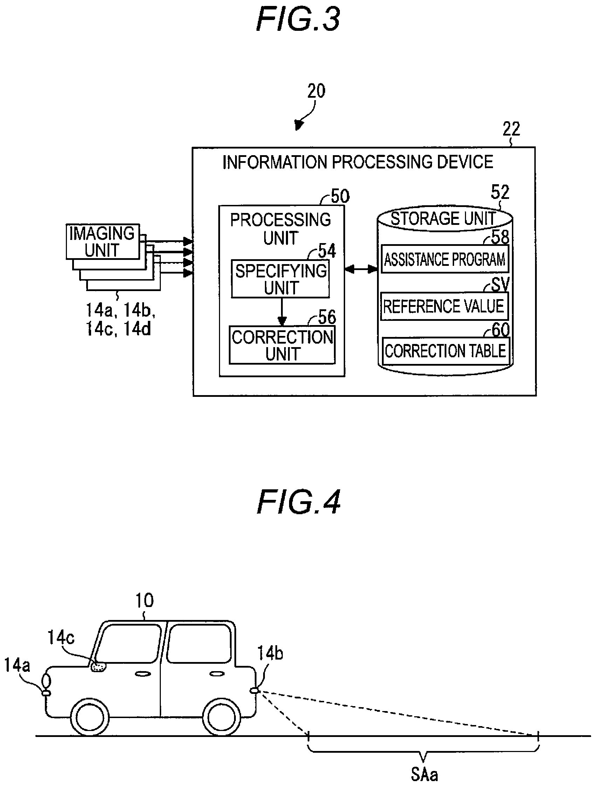

Fig. 3 is a functional block diagram for explaining a function of the information processing device 22. As illustrated in Fig. 3, the information processing device 22 includes a processing unit 50 and a storage unit 52.

The processing unit 50 is implemented, for example, as a function for the CPU 36a. The processing unit 50 may be a hardware processor other than the CPU 36a. The processing unit 50 includes a specifying unit 54 and a correction unit 56. The processing unit 50 may implement the functions of the specifying unit 54 and the correcting unit 56 by reading an assistance program 58 stored in the storage unit 52. The specifying unit 54 and the correction unit 56 may be partially or entirely constituted by hardware such as a circuit including an application specific integrated circuit (ASIC). The processing unit 50 specifies the position (e.g., the position in the vertical direction) of a vanishing point in a captured image of the surroundings of the vehicle 10 acquired from the imaging unit 14, and corrects deviation of a correction target based on the specified position of the vanishing point and a preset reference value, thereby assisting driving of the vehicle 10. The reference value indicates the position of a vanishing point specified in a captured image that is obtained of the vehicle 10 in a reference state by the imaging unit 14. That is, the reference value is a value that indicates the reference position of the vanishing point. The correction target is, for example, the position of an image (e.g., an image of a target parking frame described later), which results from vehicle height, vehicle inclination, the optical axis of the imaging unit 14, and deviation of the optical axis of the imaging unit 14, to be superimposed on the captured image.

The specifying unit 54 processes the captured image acquired from the imaging unit 14. For example, the specifying unit 54 sets a position in the captured image on which the target parking frame, which is an area where the vehicle 10 is to be parked, is to be superimposed, and generates a display image, which is to be displayed on the display unit 40 for assisting parking, by superimposing the target parking frame on the captured image. Incidentally, an occupant such as a driver instructs parking assistance by touching the operation input unit 44 on the target parking frame. The specifying unit 54 acquires the captured image including an image of a pair of lines parallel to each other in the real world (e.g., lane markings of a parking space) from the imaging unit 14. The specifying unit 54 detects the pair of parallel lines in the captured image by a technique such as edge detection, thereby specifying the position of a vanishing point, at which extension lines of the pair of parallel lines intersect each other in the captured image, based on the pair of detected parallel lines.

The correction unit 56 corrects deviation of the correction target based on the reference value and the position of the vanishing point in the captured image specified by the specifying unit 54. For example, the correction unit 56 corrects deviation of the correction target based on the difference between the position of the vanishing point and the reference value. Specifically, the correction unit 56 corrects the correction target, which results from deviation of the height or inclination of the vehicle from the reference state, based on a correction table 60 in which differences are associated with correction values.

The storage unit 52 is implemented as functions for the ROM 36b, the RAM 36c, the SSD 36f, and the like. The storage unit 52 stores the assistance program 58 to be executed by the processing unit 50, a reference value SV, and the correction table 60, which are required for the execution of the assistance program 58, and the like.

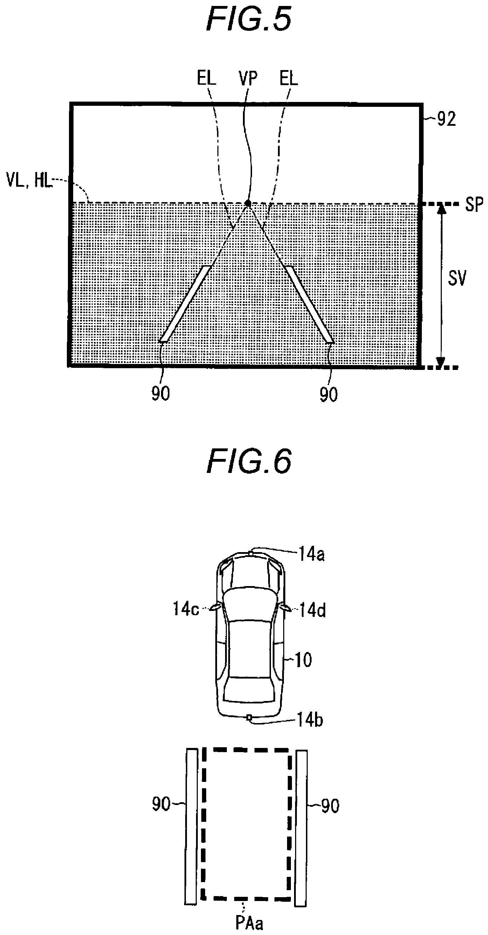

Figs. 4 to 6 are views for explaining the reference state. Fig. 4 is a side view of the vehicle 10 in the reference state. Fig. 5 is a view for explaining a method of specifying a vanishing point VP in a captured image 92 in the reference state. Fig. 6 is a plan view for explaining setting of a target parking frame PAa in the reference state.

The reference state is, for example, a state in which no occupant rides on the vehicle 10 and no baggage is loaded on the vehicle 10. Therefore, the vehicle 10 in the reference state has a reference height (e.g., the maximum vehicle height) and is in a state where the vehicle 10 is almost not inclined. Incidentally, the reference state may be set as appropriate.

As illustrated in Fig. 4, in the reference state, the imaging unit 14b generates the captured image 92, which is obtained by imaging an imaging area SAa of the surroundings of the vehicle 10. As illustrated in Fig. 5, the vanishing point VP in the reference state is, for example, a point at which extension lines EL of a pair of lane markings of a parking space, which are a pair of parallel lines 90, intersect each other. A straight line passing through the vanishing point VP (e.g., a straight line parallel to the upper and lower sides of the captured image 92) is a vanishing line VL. When a horizontal line HL is included in the captured image 92, the vanishing line VL substantially coincides with the horizontal line HL. A reference value SV is the distance between the position SP of the vanishing point VP and the lower side of the captured image 92, and is specified in advance and stored in the storage unit 52. The reference value SV may be in units of pixels. As illustrated in Fig. 6, in the reference state, the vehicle 10 has no vehicle height deviation or vehicle inclination deviation, and thus the specifying unit 54 can set the target parking frame PAa to an appropriate position between the lane markings of the parking space, which are the pair of parallel lines 90 included in the captured image 92.

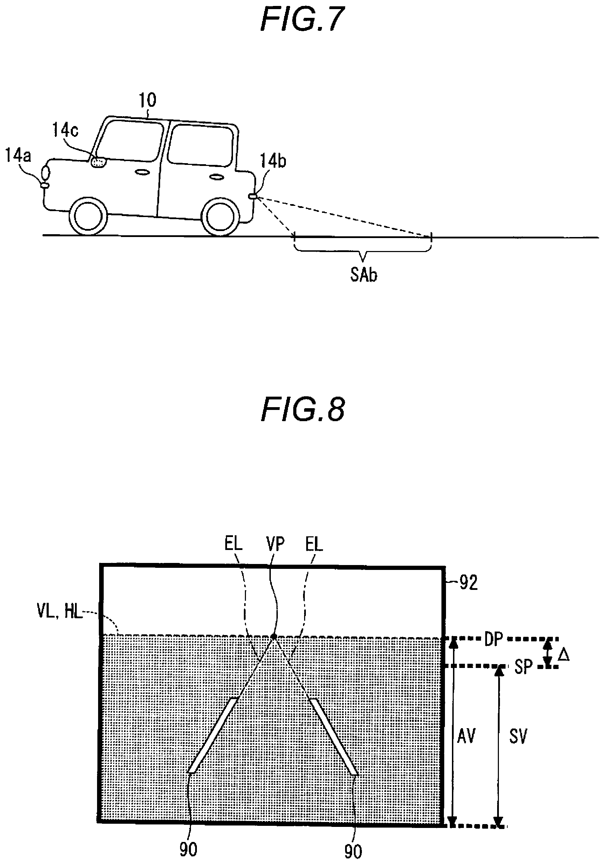

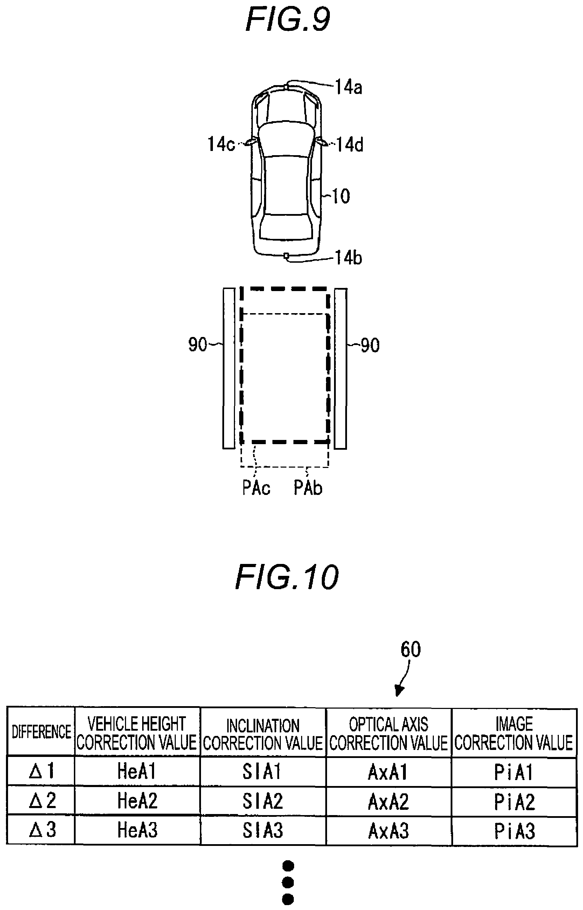

Figs. 7 to 9 are views for explaining correction of the correction target by the processing unit 50. Fig. 7 is a side view of the vehicle 10 in a state deviated from the reference state. Fig. 8 is a view for explaining deviation of the vanishing point VP in the captured image 92 in the state deviated from the reference state. Fig. 9 is a plan view for explaining correction of a target parking frame PAb in the state deviated from the reference state.

As illustrated in Fig. 7, an example of the state deviated from the reference state is a state in which the vehicle 10 has a reduced height at the rear end portion and the vehicle 10 is inclined. In this inclined state, the imaging unit 14b generates the captured image 92, which is obtained by imaging an imaging area SAb of the surroundings of the vehicle 10. The distance from the vehicle 10 to the imaging area SAb and the size of the imaging area SAb are different from the distance to the imaging area SAa and the size of the imaging area SAa in the reference state. As illustrated in Fig. 8, in the state deviated from the reference state, the specifying unit 54 detects the vanishing point VP at a position DP different from that of the vanishing point VP in the reference state. The specifying unit 54 specifies a correction target value AV, which is the distance from the lower side of the captured image 92 to the vanishing point VP, as information on the position DP of the vanishing point VP. The correction target value AV may be in units of pixels. The correction unit 56 calculates the difference Δ between the correction target value AV and the reference value SV. As illustrated in Fig. 9, in the deviated state, the target parking frame PAb, which is set in the captured image 92 by the specifying unit 54, is deviated in the longitudinal direction of the vehicle 10 from the position between the pair of parallel lines 90 in the real world. The correction unit 56 corrects the target parking frame PAb based on the difference Δ, thereby setting a target parking frame PAc at an appropriate position between the lane markings.

Fig. 10 is a table illustrating an example of the correction table 60.

As illustrated in Fig. 10, the correction table 60 associates the difference Δn between the reference value SV and the correction target value AV with correction values for correction of the correction target. For example, the correction table 60 associates the difference Δ with vehicle height correction values HeAn (n=1, 2, ...) for correction of the vehicle height, inclination correction values SIAn for correction of the inclination of the vehicle 10, optical axis correction values AxAn for correction of the optical axis of a lens in the imaging unit 14, and image correction values PiAn for correction of the position of the target parking frame PAb to be superimposed on the captured image 92. The correction unit 56 extracts a correction value associated with the calculated difference Δ and uses the value to correct the vehicle height, the inclination of the vehicle 10, the optical axis, the position in the captured image 92, or the like, which is the correction target.

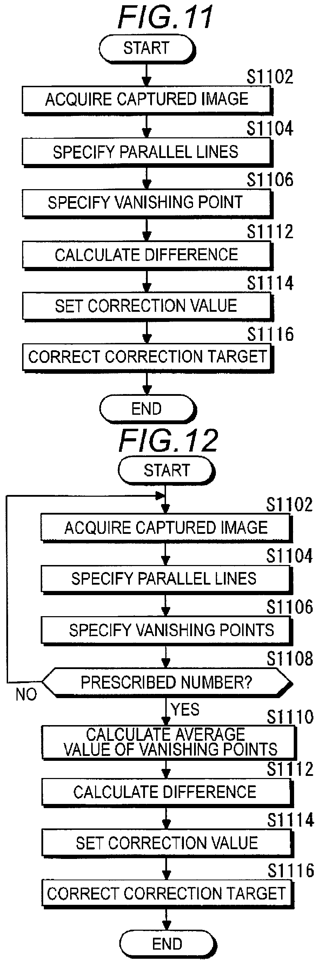

Fig. 11 is a flowchart of an assistance processing executed by the processing unit 50. The processing unit 50 executes the assistance processing by reading the assistance program 58 stored in the storage unit 52.

As illustrated in Fig. 11, in the assistance processing, the specifying unit 54 acquires the captured image 92 from the imaging unit 14 (S1102). The specifying unit 54 specifies the pair of parallel lines 90 included in the captured image 92 by a technique such as edge detection (S1104). The specifying unit 54 specifies the vanishing point VP at which the extension lines EL of the pair of parallel lines 90 intersect each other, and outputs the correction target value AV, which is information on the position of the vanishing point VP in the captured image 92, to the correction unit 56 (S1106).

The correction unit 56 calculates the difference Δ between the correction target value AV, which is information on the position of the vanishing point VP specified by the specifying unit 54, and the reference value SV (S1112). The correction unit 56 extracts and sets a correction value associated with the calculated difference Δ from the correction table 60 (S1114). The correction unit 56 corrects the correction target based on the extracted correction value (S1116). For example, the correction unit 56 extracts an image correction value PiAn from the correction table 60, corrects the position of the target parking frame PAb, which is to be superimposed on the captured image 92, based on the image correction value PiAn, and causes a display image, which is generated by the correction, to be displayed on the display unit 40, thereby assisting the driver to park. The assistance processing is completed in this way.

As described above, in the assistance apparatus 20, the processing unit 50 specifies the vanishing point VP of the pair of parallel lines 90 included in the captured image 92 acquired from the imaging unit 14, and corrects the correction target based on the correction value set based on the vanishing point VP and the reference value SV. As described above, the assistance apparatus 20 corrects the correction target based on the captured image 92, whereby it is not necessary to separately provide a sensor such as a vehicle height sensor, so that deviation of the correction target caused by a change in the vehicle height, the inclination of the vehicle 10, or the like can be corrected with a less complicated configuration.

As described above, the assistance apparatus 20 corrects the correction target by specifying the vanishing point VP based on the pair of parallel lines 90. Thus, even in an environment where it is difficult to place the horizontal line HL in the captured image 92, such as a parking space, the assistance apparatus 20 can correct the correction target by specifying the vanishing point VP based on the pair of parallel lines 90.

### <Second Embodiment

Next, a second embodiment in which the above-described assistance processing is partially modified will be described. In the second embodiment, the specifying unit 54 specifies positions of a plurality of vanishing points VP from a plurality of captured images 92. The specifying unit 54 outputs, as an average vanishing point VP position, the average value of a plurality of correction target values AV, which indicate the positions of the plurality of vanishing points VP, to the correction unit 56. The correction unit 56 corrects the correction target based on the reference value SV and the average value of the correction target values AV. For example, the correction unit 56 may correct the correction target by calculating the difference Δ between the average value of the correction target values AV and the reference value SV and extracting a correction value associated with the difference Δ from the correction table 60.

Fig. 12 is a flowchart of an assistance processing executed by the processing unit of the second embodiment. In the processing of the second embodiment, a description related to the same processing as that of the first embodiment will be omitted or simplified.

As illustrated in Fig. 12, the specifying unit 54 executes steps S1102 to S1106. The specifying unit 54 determines whether or not the number of specified vanishing points VP is a predetermined number (S1108). When it is determined that the number of specified vanishing points VP is not the predetermined number (S1108: No), the specifying unit 54 repeats the process after step S1102. When it is determined that the number of specified vanishing points VP has reached the predetermined number (S1108: Yes), the specifying unit 54 calculates the average value (e.g., the arithmetic average value) of the vertical positions (i.e., the correction target values AV) of the predetermined number of varnishing points VP, and outputs, to the correction unit 56, the average value as information on the positions of the vanishing points VP (S1110).

The correction unit 56 calculates the difference Δ between the average value of the correction target values AV, which indicate the positions of the plurality of vanishing points VP, and the reference value SV (S1112), and executes step S1114 and the following process based on the difference Δ.

As described above, the assistance apparatus 20 of the second embodiment can increase the accuracy of correction since it specifies a plurality of vanishing points VP and corrects the correction target based on the difference between the average value of the correction target values AV, which is the average of the plurality of vanishing points VP, and the reference value SV.

The function, connection relationship, number, arrangement, and the like of the elements in each embodiment described above may be appropriately changed, deleted, and so on within the scope of the disclosure and the scope equivalent to the scope of the disclosure. Individual embodiments may also be appropriately combined with each other. The order of individual steps in each embodiment may be appropriately changed.

For example, the above-described embodiment shows an example in which the specifying unit 54 specifies the vanishing point VP, but this disclosure is not limited thereto. The specifying unit 54 may specify the horizontal line HL or the vanishing line VL. For example, the specifying unit 54 may acquire a captured image including the horizontal line HL from the imaging unit 14, and may specify the horizontal line HL by a technique such as edge detection. In addition, the specifying unit 54 may acquire a captured image including a pair of parallel lines, and may specify a vanishing line, which is a straight line including a point (i.e., a vanishing point VP) at which extension lines of the pair of parallel lines intersect each other within the captured image, based on the pair of parallel lines. In this case, the correction unit 56 may correct the correction target based on the difference Δ between the position of the horizontal line HL or the vanishing line VL and the preset reference value SV. Even in this case, the specifying unit 54 may specify a plurality of horizontal lines HL or vanishing lines VL from a plurality of captured images, and the correction unit 56 may correct the correction target based on the reference value and the average of the positions of the horizontal lines HL or the vanishing lines VL.

The above-described embodiments show an example in which the correction unit 56 corrects the correction target based on the difference between the position of the vanishing point VP, the vanishing line VL, or the horizontal line HL and the reference value, but this disclosure is not limited thereto. For example, the correction unit 56 may correct the correction target based on the ratio between the position of the vanishing point VP, the vanishing line VL, or the horizontal line HL and the reference value.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention. Accordingly, it is expressly intended that all such variations, changes and equivalents which fall within the scope of the present invention as defined in the claims, be embraced thereby.

## Claims

1. An assistance apparatus (20) comprising:
an imaging unit (14a, 14b, 14c, 14d) that is configured to capture an image of a surrounding of a vehicle (10) to generate a captured image (92); and
a processing unit (50) that is configured to correct deviation of a correction target based on a preset reference value (SV) and a position of a vanishing point (VP), a vanishing line (VL), or a horizontal line (HL) specified in the captured image (92) to assist driving of the vehicle (10).

2. The assistance apparatus according to claim 1,
wherein the processing unit (50) is configured to acquire the captured image (92) including an image of a pair of parallel lines (90), which are parallel to each other, and to specify the position of the vanishing point (VP) or the vanishing line (VL) based on the pair of parallel lines (90).

3. The assistance apparatus according to claim 2, configured to assist a driver to park the vehicle (10), wherein the pair of parallel lines (90) are lane markings of a parking space.

4. The assistance apparatus according to any one of claims 1 to 3,
wherein the processing unit (50) is configured to specify positions of a plurality of vanishing points (VP), vanishing lines (VL), or horizontal lines (HL) from a plurality of the captured images (92), and to correct the correction target based on the reference value (SV) and an average of the positions of the plurality of horizontal lines (HL), vanishing lines (VL), or vanishing points (VP).

5. The assistance apparatus according to any one of claims 1 to 4,
wherein the correction target includes at least one of a vehicle height, an inclination of the vehicle, an optical axis of a lens in the imaging unit (14a, 14b, 14c, 14d), and a position of a target parking frame (PAc) to be superimposed on the captured image (92).
